# FASCICULE DE BREVET EUROPEEN

(11) **EP 2 237 385 B1**
(45) Date de publication et mention de la délivrance du brevet: **13.02.2013**
(21) Numéro de dépôt: 10350003.9
(22) Date de dépôt: 23.02.2010
(51) Int. Cl.: H02G 3/08, H01R 13/52

(54) **Garniture de passe cable**
Kabeldurchführungsgarnitur
Cable grommet fitting

(30) Priorité: 31.03.2009 FR 0901567
(43) Date de publication de la demande: 06.10.2010
(73) Titulaire: RCA NOVA, 44000 Nantes (FR)
(72) Inventeur: Corre, Emmanuel, 44000 Nantes (FR); Roux, Rodolphe, 44000 Nantes (FR)
(74) Mandataire: Tournel, Jean Louis

(56) Documents cités:
- EP-A- 1 610 423
- WO-A-01/57980

## Description

L'invention se rapporte à une garniture de passe-câble étanche.

Elle se rapporte également au boitier de distribution électrique équipé du passe câble.

Il existe de nombreux passe-câbles destinés à permettre à un câble électrique de traverser une paroi par exemple d'armoire. Une première fonction est de protéger le câble et de l'immobiliser. Une seconde fonction est de réaliser une étanchéité plus ou moins performante afin de limiter les entrées de poussières et/ou d'eau dans l'armoire.

Pour cela le passe câble comporte souvent une pièce tubulaire souple ( garniture souple) que l'on engage depuis une extrémité du câble et qui est ensuite comprimée au moyen de deux bagues et de deux écrous.

Un inconvénient de ces dispositifs est, que pour la mise en place du passe câble, l'une des extrémités du câble ne doit pas être munie de son connecteur car il interdirait l'introduction du câble dans le passe câble. Cela ne convient donc pas pour certains usages.

On connait une solution US 2009/0025977 qui prévoit une pièce tubulaire fendue, des bagues constituées de demi-cylindre et des écrous en deux parties de sorte à pouvoir assembler les deux parties.

Il est ainsi possible de placer le passe câble autour du câble même si le câble est déjà branché ou pourvu à ses extrémités d'un connecteur.

On connait un passe câble qui comporte à une extrémité, un opercule qui doit être retiré ou détruit partiellement pour mettre en place le câble. Tant que cet opercule est intact et présent, l'étanchéité est bonne. Le passe câble est en attente sur une armoire cependant dès que l'on a mis un câble on ne peut le retirer car si on le retire, il y a défaut d'étanchéité.

Il existe des passe câble avec bouchon. Il suffit donc de remettre en place le bouchon mais ils sont peu utilisés car les bouchons se perdent.

Dans la demande EP 1 610 423 qui décrit un boitier, on fait appel à des passe câbles comprenant deux jeux de demi-disques répartis au long d'un axe longitudinal qui sera matérialisé par le câble. Un demi-jeu est monté sur le couvercle et se positionne face à l'autre demi-jeu lorsque le boitier est fermé, les demi-disques d'un des jeux venant en face des demi-disques de l'autre jeu pour fermer le passage.

Une telle solution offre une bonne étanchéité liée notamment à la multiplicité des demi-disques et à la souplesse des demi-disques. Ceux-ci sont très souples pour s'adapter à une grande variété de diamètre de câbles.

De même on connait wo200157980.

On souhaite cependant offrir une meilleure étanchéité à ce type de boitier et tenir compte des diamètres usuels des câbles.

A cet effet, l'invention se rapporte à une garniture d'étanchéité pour passe câble constituée de deux parties complémentaires qui se positionnent de part et d'autre d'un plan de joint contenant l'axe longitudinal de la garniture, la dite garniture comprenant à une extrémité deux demi voiles fermant l'entrée de la garniture, cette garniture d'étanchéité étant **caractérisée en ce que** chaque demi-voile porte une lamelle s'appliquant sur l'une des faces de l'autre demi-voile, les dites lamelles formant une paroi de fermeture et ces lamelles sont disposées en sorte que la zone de jonction desdites lamelles soit sécante à la zone de jonction des demi-voiles.

L'invention sera bien comprise à l'aide de la description ci après faite à titre d'exemple en regard du dessin qui représente :

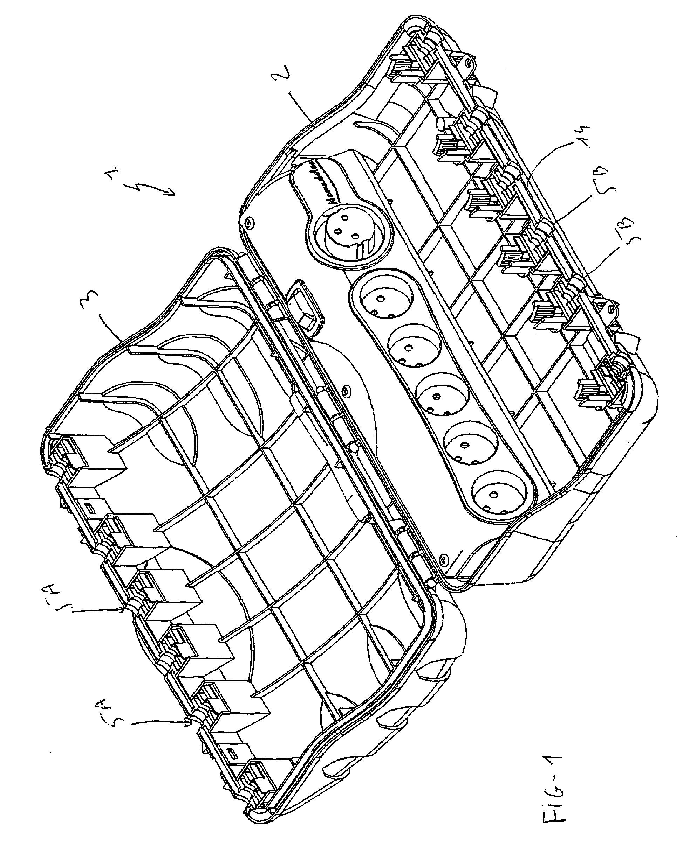

FIG 1 : vue d'un boitier ouvert équipé de garnitures selon l'invention

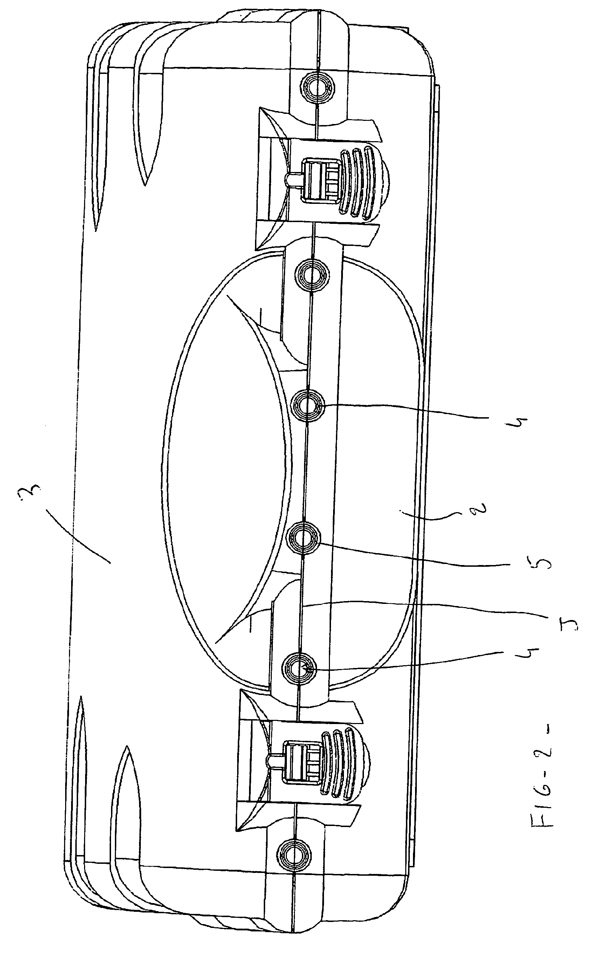

FIG 2 : Vue du boitier de la figure 1 en position fermée.

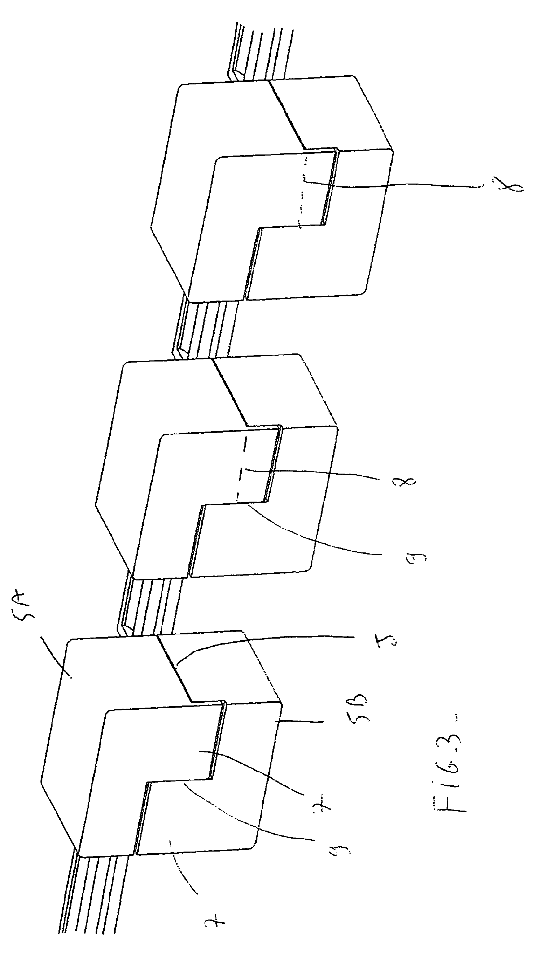

FIG 3 : Un ensemble de garniture vue de l'intérieur du boitier

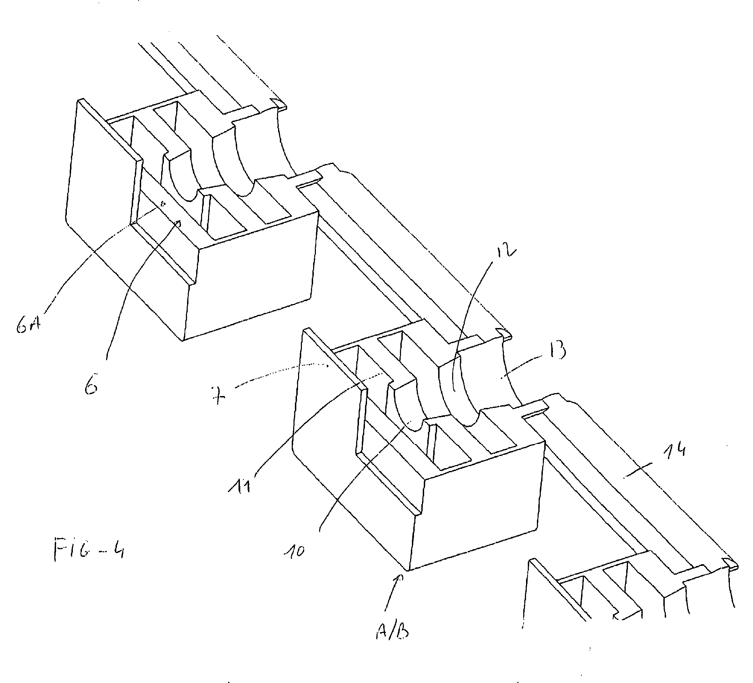

FIG4 : Vue d'une demi-garniture
FIG 5 : Vue d'une coupe axiale d'une demi-garniture.

En se reportant au dessin, on voit un boitier 1 accueillant une multiprise.

Ce boitier comporte une base 2 et un couvercle 3, ici articulé sur la base.

Dans la zone de jonction du couvercle avec la base donc au niveau du plan d'appui du couvercle est positionné au moins un passe câble 4.

Chaque passe câble comprend une garniture 5 d'étanchéité en deux parties 5A, 5B complémentaires qui se positionnent de part et d'autre d'un plan de joint J contenant l'axe longitudinal de la garniture. Le plan de joint de ces deux parties est coplanaire au plan de joint du couvercle et de la base. Le mouvement du couvercle, lors de la fermeture du boitier, vient appliquer les deux parties 5A, 5B de la garniture l'une contre l'autre et serrer le câble électrique.

Le verrouillage en position rapprochée des deux parties du passe-câble est réalisé par les moyens de verrouillage du boitier.

Chaque partie 5A de la garniture comprend à une extrémité un demi-voile 6 pour fermer l'entrée de la garniture avec l'autre demi-voile lorsque le couvercle est fermé. Ainsi même si aucun câble traverse le passe câble considéré l'entrée du boitier est fermée. En position fermée et sans câble, le bord libre 6A d'un demi-voile est en contact avec le bord libre de l'autre demi-voile et définit une zone 8 de jonction. Les bords étant jointifs, la poussière ne doit pas pénétrer.

Eventuellement, le bord libre de ces demi-voiles peut se positionner au-delà du plan de joint formant un recouvrement. L'extrémité de ce demi-voile pourra être biseauté ou aminci.

Avantageusement, chaque demi voile porte une lamelle 7 s'appliquant sur l'une des faces de l'autre demi-voile, les dites lamelles formant une paroi de fermeture et ces lamelles sont disposées en sorte que la zone de jonction desdites lamelles soit sécante à la zone 8 de jonction des demi voiles.

La lamelle s'applique sur une partie du demi-voile qui ne le porte pas.

En positionnant cette paroi de fermeture avec des zones 8,9 de jonction sécantes, on limite les risques de pénétration d'eau entre les bords libres des lamelles ou des demi-voiles. En effet si l'eau parvient à passer dans la zone de jonction des lamelles, elle est empêchée par les demi-voiles qui se trouvent derrière. On a un recouvrement qui améliore l'étanchéité.

Ici le positionnement des garnitures est tel que les demi-voiles forment une première barrière à l'entrée de poussière dans le boitier et les languettes une seconde barrière.

Ici, la zone de jonction 8 des demi-voiles est à angle droit de la zone de jonction 9 des lamelles.

La face active 7A de la lamelle est dans le même plan que la face arrière du demi-voile.

Cette lamelle s'étend au delà du plan de joint de chaque garniture et lors de la mise en place du câble, elle se couche et s'applique sur le câble.

Avantageusement, en combinaison ou non avec ce qui précède, la garniture d'étanchéité comprend une portée 10 conique en deux parties, chacune des demi-portée étant soutenue par une fine membrane 11 souple, l'épaisseur de la membrane souple étant inférieure à la dimension de la portée conique prise selon le même axe.

Lorsqu'on va venir appliquer les deux demi-portées coniques 10 complémentaires contre le câble par rapprochement des parties de garniture selon une direction radiale au câble, la souplesse de la membrane 11 souple va permettre à la portée conique de continuer à s'appliquer correctement sur le câble car c'est d'abord la membrane qui va se déformer pour s'adapter au diamètre du câble. La surface de contact avec le câble est donc importante tout en bénéficiant de la souplesse de la membrane porteuse.

Cependant au delà d'un diamètre de câble supérieur à celui de la portée conique, l'application de la portée conique portée par la fine membrane ne peut plus se faire correctement.

En complément, il a donc été prévu, une seconde portée conique 12 de plus grand diamètre mais cette fois ci la paroi qui présente cette portée est d'épaisseur identique à la dimension de la portée conique prise selon le même axe.

Cette seconde portée conique 12 est également en deux parties chacune étant portée par une demi-garniture 5A, 5B.

On a donc réalisé une garniture multi étages qui est apte à accueillir différents diamètre de câble.

Dans l'exemple représenté, les trois moyens d'étanchéité 7,10,12 sont présents sur chaque orifice du boitier.

En amont de la portée conique 12 épaisse, il est prévu une portée 13 cylindrique de rayon constant constituant un indicateur de diamètre maximal de câble admissible par la garniture.

Ces trois moyens d'étanchéité sont portés par un corps A,B venant s'encastrer dans une empreinte ou un logement du boitier ou de l'armoire.

Les moyens d'étanchéité sont répartis de la manière suivante : depuis l'intérieur du boitier, on trouve les volets ou lamelles7 portés par les demi-voiles 6 puis à distance la portée conique 10 présentée par la fine membrane 11 et ensuite la seconde portée conique 12 et en dernier la portée cylindrique 13 à rayon constant.

Avantageusement, les demi-garnitures 5A, 5B sont réunies entre elles au moins deux à deux par un jonc 14 servant de joint d'étanchéité dans les zones du boitier situées entre les garnitures.

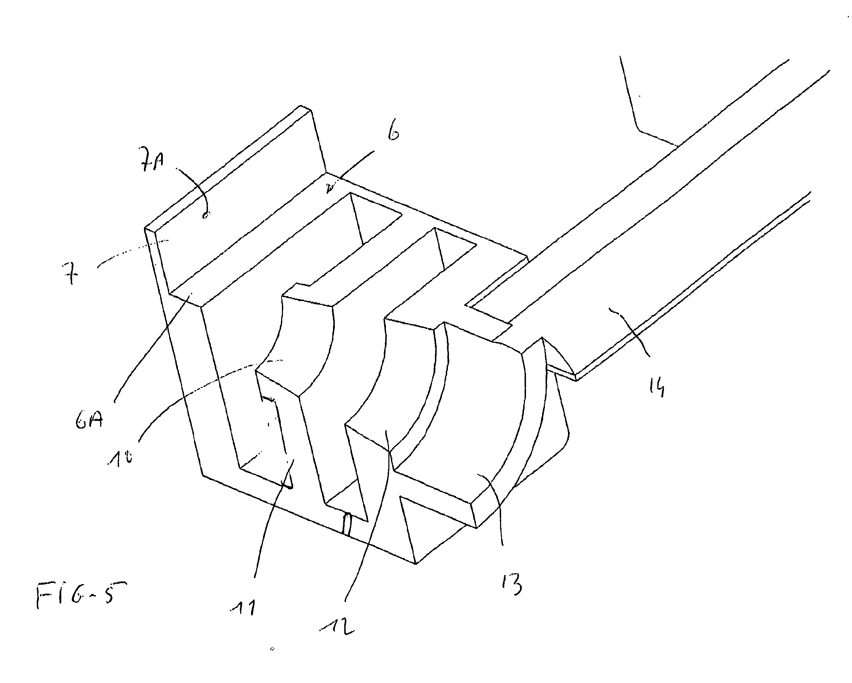

Comme on le voit en figure 5, les membranes 11 forment deux à deux des cavités où pourrait s'accumuler des condensats.

Il a été prévu des canaux d'évacuation vers l'extérieur des dits condensats.

## Revendications

1. Garniture d'étanchéité pour passe câble constituée de deux parties (5A,5B) complémentaires qui se positionnent de part et d'autre d'un plan de joint (J) contenant l'axe longitudinal de la garniture, la dite garniture comprenant à une extrémité deux demi voiles (6) fermant l'entrée de la garniture, cette garniture d'étanchéité étant **caractérisée en ce que** chaque demi voile porte une lamelle (7) s'appliquant sur l'une des faces de l'autre demi-voile, les dites lamelles formant une paroi de fermeture et ces lamelles (7) sont disposées en sorte que la zone (9) de jonction desdites lamelles soit sécante à la zone (8) de jonction des demi voiles.

2. Garniture d'étanchéité pour passe câble selon la revendication 1 caractérisée en la zone (8) de jonction des demi-voiles est à angle droit de la zone (9) de jonction des lamelles.

3. Garniture d'étanchéité pour passe-câble selon la revendication 1 ou 2 **caractérisée en ce qu'**elle comprend une portée (10) conique en deux parties ,chacune des demi-portée étant soutenue par une fine membrane (11) souple, l'épaisseur de la membrane souple étant inférieure à la dimension de la portée conique prise selon le même axe.

4. Garniture d'étanchéité pour passe-câble selon la revendication 3 **caractérisée en ce qu'**elle comprend une seconde portée conique (12) en deux parties portée par une paroi d'épaisseur identique à la dimension de la portée conique prise selon le même axe.

5. Garniture d'étanchéité pour passe-câble selon l'une quelconque des revendications précédentes **caractérisé en ce qu'**il est prévu une portée (13) cylindrique de rayon constant constituant un indicateur de diamètre maximal de câble admissible par la garniture.

6. Garniture d'étanchéité pour passe-câble selon la revendication 1 **caractérisée en ce que** depuis l'intérieur du boitier, sont positionnés successivement des lamelles (7) portés par des demi-voiles (6) puis à distance, une portée conique (10) présentée par une fine membrane (11) et ensuite une seconde portée conique (12) et en dernier une portée cylindrique (13) à rayon constant constituant un indicateur de diamètre maximal.

7. Garniture d'étanchéité selon l'une quelconque des revendications précédentes **caractérisée en ce que** la garniture est reliée à une autre garniture par un jonc (14) constituant un joint d'étanchéité.

8. Garniture d'étanchéité selon l'une quelconque des revendications précédentes **caractérisée en ce que** le bord libre des demi-voiles est aminci ou biseauté pour un recouvrement.

9. Garniture d'étanchéité selon la revendication 3 **caractérisé en ce que** les fines menbrane souple 11 delimitent deux à deux des cavités pouvues chacune d'une évacuation des condensats vers l'extérieur.

10. Boitier de distribution électrique destiné à contenir une multiprise présentant un couvercle et au moins un passe-câble comprenant une garniture d'étanchéité en deux parties positionnées de part et d'autre du plan d'appui du couvercle ce boitier étant **caractérisé en ce qu'**il comprend au moins une garniture selon l'une quelconque des revendications 1 à 9.

## Claims

1. Seal fitting for a cable grommet comprising two complementary parts (5A, 5B) positioned on either side of a joint plane (J) containing the longitudinal axis of the fitting, said fitting having at one end two half-lands (6) closing the fitting inlet, this seal fitting being **characterised in that** each half-land supports a thin strip (7) which is applied against one of the faces of the other half-land, said thin strips forming a closure wall, and these thin strips (7) are disposed so that the connecting zone (9) of said thin strips sits in a secant line arrangement with respect to the connecting zone (8) of the half-lands.

2. Seal fitting for a cable grommet as claimed in claim 1, **characterised in that** the connecting zone (8) of the half-lands is disposed at a right angle to the connecting zone (9) of the thin strips.

3. Seal fitting for a cable grommet as claimed in claim 1 or 2, **characterised in that** it comprises a conical seating (10) in two parts, each of the half-seatings being supported by a flexible fine membrane (11), the thickness of the flexible membrane being less than the dimension of the conical seating along the same axis.

4. Seal fitting for a cable grommet as claimed in claim 3, **characterised in that** it comprises a second conical seating (12) in two parts supported by a wall with a thickness identical to the dimension of the conical seating along the same axis.

5. Seal fitting for a cable grommet as claimed in any one of the preceding claims, **characterised in that** a cylindrical seating (13) is provided, having a constant radius serving as an indicator of the maximum diameter of the cable which can be accommodated by the fitting.

6. Seal fitting for a cable grommet as claimed in claim 1, **characterised in that**, positioned in succession from the interior of the box are the thin strips (7) supported by the half-lands (6) and then, at a distance, a conical seating (10) in the form of a fine membrane (11) followed by a second conical seating (12) and finally a cylindrical seating (13) having a constant radius serving as an indicator of the maximum diameter.

7. Seal fitting as claimed in any one of the preceding claims, **characterised in that** the fitting is connected to another fitting by a joining piece (14) serving as a seal.

8. Seal fitting as claimed in any one of the preceding claims, **characterised in that** the free edge of the half-lands is thinner or chamfered to form a lap.

9. Seal fitting as claimed in claim 3, **characterised in that** the flexible fine membranes 11 bound cavities in pairs, each provided with a drain to the outside for condensates.

10. Electrical distribution box designed to contain a multiple connector, having a lid and at least one cable grommet comprising a seal fitting in two parts positioned on either side of the support plane of the lid of this box, **characterised in that** it comprises at least one fitting as claimed in any one of claims 1 to 9.

## Patentansprüche

1. Dichtungssatz für Kabeldurchgangstülle, der aus zwei komplementären Teilen (5A, 5B) gebildet ist, die beidseits einer die Längsachse des Dichtungssatzes enthaltenden Stoßfläche (J) platziert sind, wobei der Dichtungssatz an einem Ende zwei den Zugang des Dichtungssatzes verschließende Wandhälften (6) aufweist, wobei der Dichtungssatz **dadurch gekennzeichnet ist, dass** jede Wandhälfte mit einer Lamelle (7) versehen ist, die auf eine der Seiten der anderen Wandhälfte gedrückt wird, wobei die Lamellen eine Verschlusswand bilden, und die Lamellen (7) solchermaßen angeordnet sind, dass sich der Verbindungsbereich (9) der Lamellen mit dem Verbindungsbereich (8) der Wandhälften schneidet.

2. Dichtungssatz für Kabeldurchgangstülle nach Anspruch 1, **dadurch gekennzeichnet, dass** der Verbindungsbereich (8) der Wandhälften im rechten Winkel zum Verbindungsbereich (9) der Lamellen verläuft.

3. Dichtungssatz für Kabeldurchgangstülle nach Anspruch 1 oder 2, **dadurch gekennzeichnet, dass** er eine zweitteilige konische Auflagefläche (10) umfasst, wobei jede Auflageflächenhälfte von einer dünnen elastischen Membran (11) gestützt wird, wobei die Dicke der elastischen Membran geringer ist als die Abmessung der konischen Auflagefläche längs derselben Achse.

4. Dichtungssatz für Kabeldurchgangstülle nach Anspruch 3, **dadurch gekennzeichnet, dass** er eine zweite zweiteilige konische Auflagefläche (12) umfasst, die von einer Wand getragen wird, deren Dicke der Abmessung der konischen Auflagefläche längs derselben Achse entspricht.

5. Dichtungssatz für Kabeldurchgangstülle nach einem der vorhergehenden Ansprüche, **dadurch gekennzeichnet, dass** eine zylindrische Auflagefläche (13) mit konstantem Radius vorgesehen ist, die einen Indikator für den maximalen Kabeldurchlass durch die Dichtung bildet.

6. Dichtungssatz für Kabeldurchgangstülle nach Anspruch 1, **dadurch gekennzeichnet, dass** von der Doseninnenseite ausgehend nacheinander von Wandhälften (6) getragene Lamellen (7), dann mit Abstand dazu eine von einer dünnen Membran (11) gestützte konische Auflagefläche (10) und anschließend eine zweite konische Auflagefläche (12) und zuletzt eine zylindrische Auflagefläche (13) mit konstantem Radius, der einen Indikator für den maximalen Kabeldurchlass bildet, angeordnet sind.

7. Dichtungssatz für Kabeldurchgangstülle nach einem der vorhergehenden Ansprüche, **dadurch gekennzeichnet, dass** der Dichtungssatz mit einem andere Dichtungssatz durch eine Leiste (14) verbunden ist, die eine Dichtung bildet.

8. Dichtungssatz für Kabeldurchgangstülle nach einem der vorhergehenden Ansprüche, **dadurch gekennzeichnet, dass** der freie Rand der Wandhälften für eine Abdeckung verjüngt oder abgeschrägt ist.

9. Dichtungssatz für Kabeldurchgangstülle nach Anspruch 3, **dadurch gekennzeichnet, dass** die elastischen dünnen Membrane (11) paarweise Höhlungen begrenzen, die jeweils mit einem Kondensatablauf versehen sind.

10. Verteilerdose, die dazu bestimmt ist, eine Mehrfachsteckdose zu enthalten, die einen Deckel und wenigstens eine Kabeldurchgangstülle mit einem aus zwei Teilen bestehenden Dichtungssatz aufweist, die beidseits der Auflageebene des Deckels platziert sind, wobei die Verteilerdose **dadurch gekennzeichnet ist, dass** sie wenigstens einen Dichtungssatz nach einem der Ansprüche 1 bis 9 umfasst.
